# EUROPÄISCHE PATENTSCHRIFT

(11) **EP 1 202 610 B1**
(45) Veröffentlichungstag und Bekanntmachung des Hinweises auf die Patenterteilung: **05.09.2007**
(21) Anmeldenummer: 01117702.9
(22) Anmeldetag: 26.07.2001
(51) Int. Cl.: H05B 37/02

(54) **Verfahren zum Ansteuern einer sensorgesteuerten Lampe**
Method for driving a sensor controlled lamp
Procédé pour commander une lampe controlée par un capteur

(30) Priorität: 23.10.2000 DE 10052541
(43) Veröffentlichungstag der Anmeldung: 02.05.2002
(73) Patentinhaber: Patent-Treuhand-Gesellschaft für elektrische Glühlampen mbH, 81543 München (DE)
(72) Erfinder: Hutzler, Michael, 91315 Höchstadt (DE); Loehmann, Gunther, Dr., 67470 Seltz (FR); Schurig, Juergen, Dr., 85521 Ottobrunn (DE)

(56) Entgegenhaltungen:
- EP-A- 0 825 500
- DE-A- 19 514 973
- US-A- 5 837 994

## Beschreibung

### Technisches Gebiet

Die Erfindung betrifft ein Verfahren zum Ansteuern einer sensorgesteuerten Lampe gemäß dem Oberbegriff des Patentanspruchs 1 und eine sensorgesteuerte Lampe gemäß dem Oberbegriff des Patentanspruchs 12.

### Stand der Technik

Aus der DE 195 14 973 A1 ist eine Leuchtstofflampe bekannt, bei der die Ansteuerung eines Vorschaltgerätes für das Entladungsgefäß der Leuchtstofflampe in Abhängigkeit vom Signal eines Lichtsensors erfolgt, über den der Lichteinfall aus der Umgebung erfaßt wird.

Ein Problem bei derartigen Leuchtstofflampen ist, daß der Einfall von Eigenlicht mit dem Lichteinfall aus der Umgebung überlagert ist, so daß das vom Lichtsensor erfasste Signal verfälscht werden kann. Dieses Problem wird dadurch verstärkt, dass sich das Spektrum des vom Entladungsgefäß emittierten Lichtes nach dem Starten der Lampe verändert, da der Anteil an Infrarotstrahlung unmittelbar nach dem Start relativ hoch ist und nach einer gewissen Startzeit (Einbrennzeit) auf einen geringen Wert abfällt. Demzufolge wird bei der Verwendung von Infrarotsensoren das im normalen Tageslicht enthaltene Infrarotlicht durch den in der Einbrennphase emittierten Infrarotanteil verstärkt, so daß das vom Sensor erfaßte Signal in der Einbrennphase erheblich verfälscht ist. Diese Verfälschung des Sensorsignals kann beispielsweise dazu führen, daß die Leuchtstofflampe zunächst bei Verringerung des Umgebungslichtes startet und dann nach dem Start wieder abschaltet, da die Sensoren durch den Infrarotanteil des Eigenlichtes ein Signal erfassen, daß einer größeren Helligkeit als tatsächlich vorhanden entspricht, so daß die Leuchtstofflampe trotz des geringen Lichteinfalls aus der Umgebung abgeschaltet wird.

Dieser Nachteil wird bei der DE 195 14 973 A1 dadurch überwunden, daß beim Starten der Leuchtstofflampe ein Totzeitglied geschaltet wird, so daß während einer vorgegebenen Totzeit keine Ansteuerung der Leuchtstofflampe aufgrund einer Änderung der Sensorsignale erfolgt. Diese Totzeit ist an die maximale Einbrenndauer des Entladungsgefäßes angepaßt, so daß nach Ablauf der Totzeit der Infrarotanteil des Eigenlichtes auf einen Wert abgesunken ist, der die Sensorsignale nicht mehr in der vorbeschriebenen Weise verfälscht.

Problematisch bei dieser bekannten Lösung ist allerdings, daß beispielsweise im Winter, bei niedrigen Außentemperaturen die Einbrenndauer von Leuchtstofflampen aufgrund des geringeren Quecksilberdampfdruckes wesentlich länger als in der Sommerzeit bei höheren Temperaturen ist, so daß bei extremen Bedingungen die vom Totzeitglied vorgegebene feste Totzeit kürzer als die sich bei niedrigen Temperaturen einstellende Einbrennzeit ist und auch bei dieser Lösung die vorstehend beschriebenen Instabilitäten in der Lampenansteuerung auftreten können.

Ähnliche Probleme treten auf, wenn die Leuchtstofflampe mit einer opaline Abdeckung versehen ist, so daß der vom Entladungsgefäß emittierte Infrarotanteil mehr in Richtung auf die Sensoren reflektiert wird, als es bei Lampen mit klaren Abdeckungen der Fall ist.

Die Berücksichtigung von Störlichtquellen bei der Lampenansteuerung ist prinzipiell aus US 5,837,994 bekannt.

### Darstellung der Erfindung

Demgegenüber liegt der Erfindung die Aufgabe zugrunde, ein Verfahren zum Ansteuern einer sensorgesteuerten Lampe und eine sensorgesteuerte Lampe zu schaffen, bei denen eine Verfälschung der Sensorsignale durch überlagerte Störsignale auch bei ungünstigen Betriebsbedingungen minimiert ist, um dadurch eine durch Störlichtquellen verursachte, übermäßig lange Einschaltdauer der Lampe zu verhindern.

Diese Aufgabe wird hinsichtlich des Verfahrens durch die Merkmale des Patentanspruchs 1 und hinsichtlich der sensorgesteuerten Lampe durch die Merkmale des Patentanspruchs 9 gelöst.

Erfindungsgemäß ist die Lampe mit einem Mikroprozessor versehen, über den die zeitliche Änderung des Sensorsignals aufgrund des einfallenden Lichtes erfaßt wird. In Abhängigkeit von diesen Gradienten des Sensorsignales können dann Steuerparameter zur Ansteuerung des Leuchtmittels festgelegt werden. Dieses erfindungsgemäße Konzept ermöglicht es erstmals, die Ansteuerung des Leuchtmittels in Abhängigkeit von der zeitlichen Änderung des Lichteinfalls zu steuern, so daß äußere Einflüsse, wie Temperaturschwankungen, Art der Abdeckungen, Störquellen etc., sowie das Einbrennverhalten über den Gradienten erfaßt und bei der Ansteuerung berücksichtigt wird.

Die Steuerung über die zeitliche Änderung des Steuersignals ermöglicht es beispielsweise die Verringerung des Infrarotanteils des Eigenlichtes während der Einbrennphase äußerst exakt zu erfassen, so daß die Lampe während der Einbrennphase -unabhängig von der Temperatur, dem Zustand der Lampe, der Qualität des Leuchtmittels, der Spannungsversorgung, der Art der Lampenabdeckung, der Montagelage etc.- in einem Modus betrieben werden kann, in dem aufgrund des Störlichteinfalls am Sensor keine Änderung des Betriebszustandes des Entladungsgefäßes erfolgt. Die normale Ansteuerung der Lampe erfolgt erst dann, wenn der Infrarotanteil im Eigenlicht abgeklungen ist, so daß die zeitliche Änderung des Sensorsignales aufgrund des relativ konstanten Lichteinfalls aus der Umgebung gering ist. Das heißt, dieses Umschalten ist nicht mehr abhängig von einer mittleren, an übliche Betriebsbedingungen angepassten Totzeit, sondern wird individuell, bei jedem Einschaltvorgang der Leuchtstofflampe in Abhängigkeit von den Betriebsbedingungen neu bestimmt, so dass eine ordnungsgemäße Funktion der Lampe gewährleistet ist.

Bei herkömmlichen Systemen konnte über externe, manuell einzustellende Regler noch eine gewisse Veränderung der Ein- und Abschaltschwellen erfolgen - diese Varianten erfordern jedoch eine Nachregelung bei sich verändernden Betriebsbedingungen (Winter, Sommer oder Einsatzort), so daß ein erheblicher manueller Aufwand notwendig ist, um die erforderlichen Anpassungen vorzunehmen.

Mit einer vorteilhaften Weiterbildung der Erfindung wird bei Unterschreiten eines vorbestimmten Grenzwertes der zeitlichen Änderung des Sensorsignales nach jedem Startvorgang eine Ausschalt- oder Umschaltschwelle festgelegt, die um einen vorbestimmten Wert oberhalb der Größe des Sensorsignals bei Erreichen des Grenzwertes liegt. Das heißt, erfindungsgemäß werden diese Ausschalt- oder Umschaltschwellen bei jedem Startvorgang neu bestimmt, so daß eine manuelle Anpassung wie beim vorbeschriebenen Stand der Technik nicht erforderlich ist. Bei Erreichen dieses Schwellenwertes kann beispielsweise die Lampe ausgeschaltet werden, da dann anzunehmen ist, daß genügend Tageslicht vorhanden ist. Anstelle des Ausschaltens kann selbstverständlich auch auf andere Betriebszustände, wie beispielsweise eine Leistungsreduzierung, ein Blinken, ein Dimmen oder ähnliches umgeschaltet werden.

Aufgrund der Erfassung der zeitlichen Änderung des Sensorsignales können auch Störsignale durch externes Fremdlicht -beispielsweise Autoscheinwerfer, Scheinwerfer von Nachbargebäuden etc.- ausgeblendet werden, da diese Störlichtquellen in der Regel mit einem sprunghaften Anstieg der Helligkeit verbunden sind. Das heißt, aus der sprunghaften Änderung des Steuersignales wird auf das Vorliegen eines Störlichtes geschlossen und erfindungsgemäß eine Totzeit geschaltet, die so lange läuft, bis das Störlicht das Umgebungslicht nicht mehr beeinflußt. Das heißt, während dieser Totzeit wird die Ansteuerung des Entladungsgefäßes nicht geändert.

Um ein dadurch bedingtes übermäßig langes Brennen des Entladungsgefäßes zu verhindern, wird die Ausschaltschwelle mit Fortschreiten der Totzeit erhöht, bis sie das aus dem Störlicht resultierende Sensorsignal überschreitet. Bei einsetzender Helligkeit steigt dann das Sensorsignal an, so daß trotz weiterhin vorhandenem Störlicht die Ausschaltschwelle überschritten und das Entladungsgefäß abgeschaltet wird.

Über den Mikroprozessor kann auch eine Notausschaltung vorgegeben werden, über die die Lampe automatisch bei Überschreiten eines vorbestimmten maximalen Sensorsignales abschaltet.

Die zeitliche Erfassung des Lichteinfalls über den Mikroprozessor ermöglicht es, eine Lichtkennlinie in Abhängigkeit von einem Lichtwechselzyklus, beispielsweise einem Tageszyklus zu erfassen, so daß bei bekannter Lichtkennlinie aus der zeitlichen Änderung des Sensorsignales ein Rückschluß auf die Zykluszeit, beispielsweise die Tageszeit möglich ist. Die Funktion der Lampe kann dann in Abhängigkeit von dieser ermittelten Zykluszeit gesteuert werden.

Die erfindungsgemäße Leuchtstofflampe wird vorzugsweise mit zwei Sensoren ausgeführt, wobei die Signale beider Sensoren im Mikroprozessor unabhängig voneinander oder gemeinsam verarbeitet werden.

Die Lampe läßt sich besonders kompakt ausführen, wenn der Mikroprozessor, die Sensoren und die Lampensteuerung (Vorsteuergerät etc.) auf einer einzigen gemeinsamen Platine aufgenommen sind.

Die Betriebssicherheit der sensorgesteuerten Lampe läßt sich erhöhen, wenn im Mikroprozessor ein Programm für einen Testzyklus abgelegt ist, der bei Inbetriebnahme der Lampe oder bei einem willkürlichen Abdecken der Sensoren durchfahren wird. Im Rahmen dieses Testzyklus kann die Lampe beispielsweise nach vorbestimmten Zeitintervallen ein- und ausgeschaltet werden, so daß sich der Benutzer auf einfache Weise von der Funktionsfähigkeit der Lampe überzeugen kann.

Sonstige vorteilhafte Weiterbildungen der Erfindung sind Gegenstand der weiteren Unteransprüche.

### Beschreibung der Zeichnungen

Im folgenden soll die Erfindung anhand bevorzugter Ausführungsbeispiele näher erläutert werden.

Es zeigen:
Figur 1 eine Ansicht einer erfindungsgemäßen Leuchtstofflampe;
Figur 2 ein Blockschaubild einer Schaltung der erfindungsgemäßen Leuchtstofflampe;
Figur 3 ein Ablaufdiagramm zur Erläuterung der Funktion der Leuchtstofflampe aus Figur 1;
Figur 4 den zeitlichen Verlauf des Umgebungslichteinfalls während eines Tageszyklus;
Figur 5 den zeitlichen Verlauf eines Sensorsignals während eines Zyklusses;
Figur 6 den zeitlichen Verlauf eines Sensorsignales bei sich ändernden Umgebungsbedingungen und
Figur 7 den zeitlichen Verlauf eines Sensorsignales bei Auftreten eines Störlichtes.

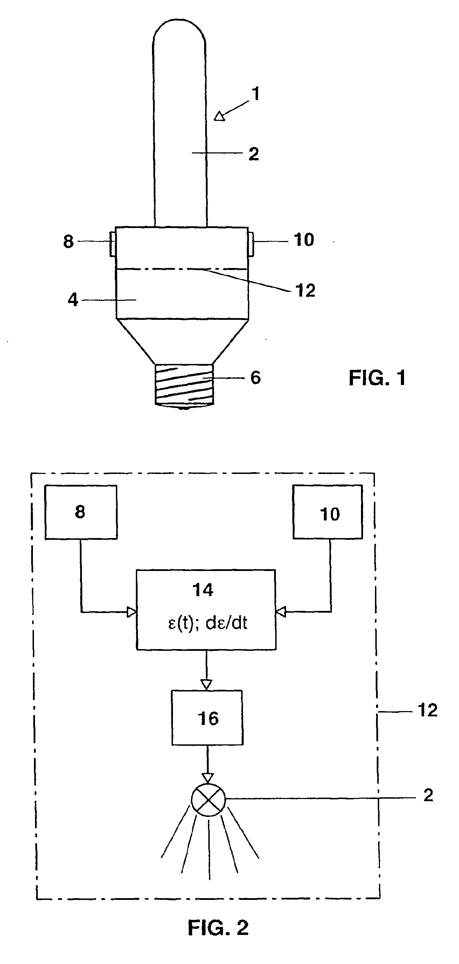

Figur 1 zeigt eine schematische Darstellung einer Leuchtstofflampe 1. Diese hat ein Entladungsgefäß 2, dessen Ende in einem Sockelgehäuse 4 befestigt ist. An dem von der Entladungsgefäß 2 entfernten Endabschnitt des Gehäuses 4 ist ein Einschraubsockel 6 zum Einschrauben der Leuchtstofflampe 1 in eine Lampenfassung ausgebildet. Am Außenumfang des Sockelgehäuses 4 sind zwei diametral zueinander angeordnete Infrarot-Sensoren 8, 10 angeordnet, über die der Infrarotanteil des einfallenden Lichtes erfassbar ist. Im Inneren des Gehäuses 4 ist eine strichpunktiert angedeutete Platine 12 aufgenommen, auf der die beiden Infrarot-Sensoren 8, 10, ein Mikroprozessor 14, sowie die übliche Lampensteuerung, wie beispielsweise das Vorschaltgerät 16 (siehe Figur 2) zur Ansteuerung des Entladungsgefäßes 2 aufgenommen sind. Wie im folgenden noch näher erläutert wird, erlaubt es der Mikroprozessor 14 aufgrund des zeitlichen Verlaufes des über die Sensoren 8, 10 einfallenden Lichtes bestimmte Schaltschwellen einzustellen und zu verändern und somit eine optimale Anpassung der Lampenansteuerung in Abhängigkeit von dem Zustand der Lampe, des Netzes und von den Umgebungsbedingungen zu gewährleisten.

Figur 2 zeigt ein stark vereinfachtes Schaltschema der Schaltung, die auf der strichpunktiert angedeuteten Platine 12 aufgenommen ist. Demgemäß wird das dem Lichteinfall entsprechende Eingangssignal ε der beiden Sensoren 8, 10 in Abhängigkeit von der Meßzeit erfaßt und aus diesen erfaßten und abgespeicherten Sensorsignalen der Gradient dε/dt gebildet. In Abhängigkeit von diesen zeitabhängigen Werten ε und dε/dt wird dann das Vorschaltgerät 16 für das Entladungsgefäß 2 angesteuert, um deren Betriebszustand zu ändern (ein/aus; dimmen, blinken etc.).

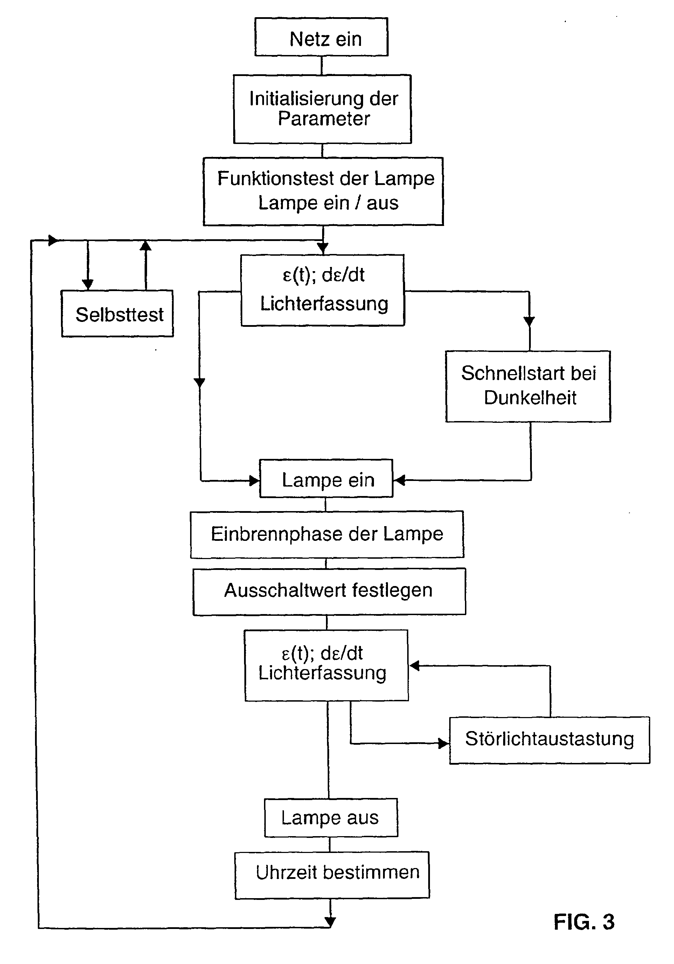

Figur 3 zeigt ein Ablaufschema des Programms, das über den Mikroprozessor 14 gesteuert wird. Das Programm wird gestartet, so bald die Leuchtstofflampe 1 in die Lampenfassung eingeschraubt wird und eine Verbindung zum Netz hergestellt ist. Nach einer derartigen erstmaligen Inbetriebnahme der Leuchtstofflampe 1 werden zunächst einige für die Lampensteuerung erforderliche Parameter initialisiert, wobei beispielsweise im Speicher des Mikroprozessors 14 abgelegte Daten ausgelesen oder in Abhängigkeit vom aktuellen einfallenden Lichteinfall angepaßt werden. Diese im Speicher des Mikroprozessors 14 abgelegten Parameter, können beispielsweise Schwellwerte zum Ein- und Ausschalten des Entladungsgefäßes, Steuerzeiten wie eine Selbsttestzeit, sowie Maximalzeiten zur Erkennung von Betriebszuständen (Einbrenndauer, Totzeiten zur Austastung von Störsignalen etc.) sein.

Nach dieser Initialisierung der Parameter erfolgt über die Programmsteuerung die Einleitung eines Funktionstestes der Leuchtstofflampe 1, wobei diese nach Ablauf einer vorbestimmten Zeit eingeschaltet und nach einer kurzen Brenndauer wieder ausgeschaltet wird. Dieser Selbsttest kann beispielsweise immer dann durchgeführt werden, wenn die Lampe mit dem Netz verbunden wird, so daß der Verbraucher sofort über die Betriebsbereitschaft der Leuchtstofflampe informiert ist.

Nach Durchführung dieses Selbsttestes erfolgt die normale Lichterfassung über die beiden Sensoren 8, 10, wobei die Sensorsignale zeitabhängig gespeichert und aus den gespeicherten Werten der vorgenannte Gradient dε /dt gebildet wird.

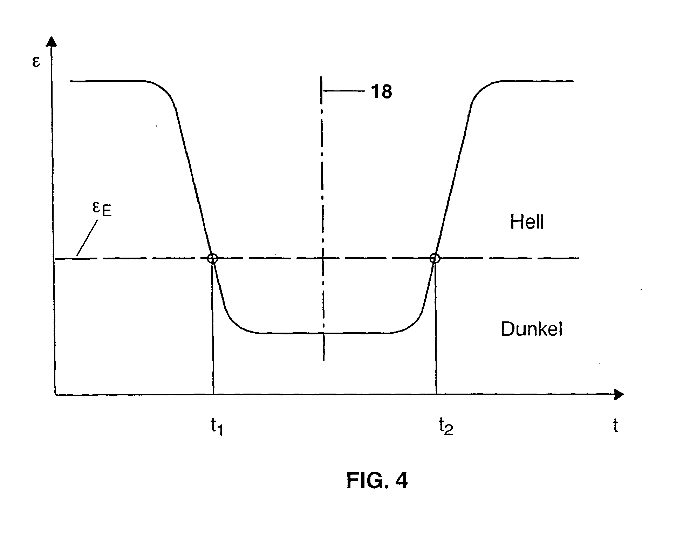

In Figur 4 ist der zeitliche Verlauf des Sensorsignals ε in Abhängigkeit von der Tageszeit t dargestellt. Bei Tageslichteinfall befindet sich das Sensorsignal auf einem hohen Niveau, das wesentlich über einer bei der Initialisierung abgelegten und ggf. an die Umgebungsbedingungen angepaßte Einschaltschwelle ε_{E} liegt. Bei Einbrechen der Dunkelheit wird das Sensorsignal ε schwächer und unterschreitet zum Zeitpunkt t₁ die Einschaltschwellen ε_{E}, so daß das Programm den Umgebungszustand "dunkel" erkennt und ein Steuersignal zum Einschalten der Entladungsgefäß 2 generiert. Bei vollständiger Dunkelheit verbleibt das Sensorsignal ε auf einem etwa konstanten niedrigen Niveau und steigt erst bei einbrechender Helligkeit in den Morgenstunden wieder zu dem Schwellwert ε_{E} hin an, den es zur Zeit t₂ erreicht. Bei Erreichen einer vorbestimmten Ausschaltschwelle, die nicht notwendigerweise mit der Einschaltschwelle ε_{E} übereinstimmt, wird das Entladungsgefäß 2 ausgeschaltet. Das vom Sensor erfaßte Sensorsignal ε bei ausgeschalteter Lampe steigt mit zunehmender Helligkeit an, bis es sein maximales Niveau in der Mittagszeit erreicht.

Für den Fall, daß über den Mikroprozessor 14 erfaßt wird, daß das Sensorsignal ε bei Anlegen der Versorgungsspannung unterhalb der Einschaltschwelle ε_{E} liegt, das heißt, daß das Sensorsignal im Dunkelbereich angeordnet ist, wird ein Schnellstart der Lampe durchgeführt und das Entladungsgefäß 2 eingeschaltet. Falls sich das Sensorsignal noch im Hellbereich befindet, wird der Lichteinfall und der Gradient d ε/dt in vorbestimmten Zeitintervallen erfasst und die Lampe eingeschaltet, wenn das Sensorsignal ε unter die Einschaltschwelle ε_{E} absinkt.

Nach dem Einschalten der Lampe wird dann aus dem Gradienten dε /dt in der nachstehend beschriebenen Weise die Einbrennphase der Lampe erfaßt und nach Beendigung der Einbrennphase eine Ausschaltschwelle festgelegt.

Auch bei eingebrannter Lampe läuft die Lichterfassung mit der Auswertung der Sensorsignale ε und der Bildung der Gradienten dε/dt weiter. Für den Fall, daß bei eingeschaltetem Entladungsgefäß 2 ein Störlicht auftritt, kann über die Programmsteuerung eine Störlichtaustastung erfolgen, über die der Einfluß des Störlichtes kompensierbar ist und somit keinen Einfluß auf den Betriebzustand des Entladungsgefäßes hat.

Nach Überschreiten der während des Programmablaufs festgelegten Ausschaltschwelle wird die Lampe 1 ausgeschaltet und ggf. aus der in Figur 3 dargestellten Kennlinie eine Uhrzeit ermittelt, die eine zeitabhängige Programmsteuerung ermöglicht. Die Programmsteuerung kehrt dann zu ihrem Ausgangszustand nach der Initialisierung der Parameter und des einmaligen Funktionstests der Lampe zurück.

Im Ablaufschema gemäß Figur 3 ist noch angedeutet, daß auch während des Programmzyklus ein Selbsttest durchgeführt werden kann, um die Leuchtstofflampe 1 zu überprüfen.

Bei dem vorbeschriebenen Ausführungsbeispiel hat die Leuchtstofflampe 2 zwei Sensoren 8, 10. Die Sensorsignale ε beider Signale können (im Mikroprozessor) getrennt voneinander oder nach einer Gewichtung (Durchschnittswert) gemeinsam verarbeitet werden.

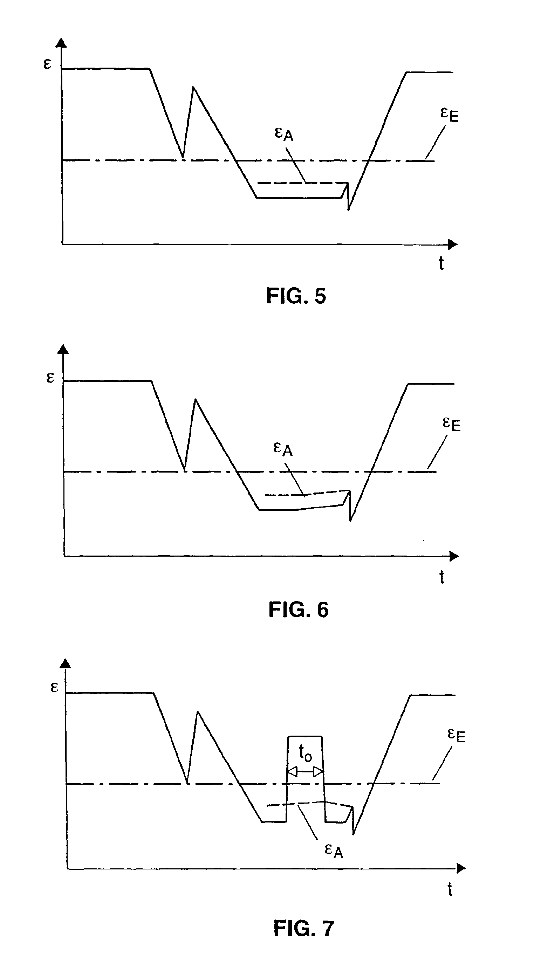

Wie bereits vorstehend ausgeführt, kann das aus der Umgebung einfallende Licht vom Eigenlicht der Entladungsgefäß 2 oder von Störquellen überlagert werden, so daß die Sensorsignale ε nicht den Lichteinfall aus der Umgebung wiedergeben. Die erfindungsgemäße Mikroprozessorsteuerung ermöglicht es, derartige Fehlerquellen aus dem Gradienten dε/dt zu erkennen und entsprechende Korrektursignale an die Lampensteuerung abzugeben. Dies sei anhand der folgenden Figuren 5 bis 7 erläutert.

Die in Figur 4 dargestellte Kennlinie stellt einen Idealzustand dar, bei dem das Sensorsignal ε nicht durch Störeinflüsse oder einen Eigenlichtanteil verfälscht ist. In der Realität stellt sich ein Sensorsignal ein, wie es in Figur 5 dargestellt ist. Wie beim vorbeschriebenen Idealzustand sinkt das Sensorsignal ε beim Übergang von hell nach dunkel zur Einschaltschwelle ε_{E} hin ab, so daß die Leuchtstofflampe 1 bei Erreichen dieser Einschaltschwelle ε_{E} eingeschaltet wird. Diese kann im Speicher des Mikroprozessors fest vorgegeben sein, prinzipiell ist es jedoch auch möglich, diese Einschaltschwelle dynamisch in Abhängigkeit von der in Figur 4 dargestellten Kennlinie anzupassen, so daß jahreszeitliche Einflüsse, der Initialisierungszeitpunkt oder der Standort der Lampe berücksichtigt werden können.

Unmittelbar nach dem Einschalten des Entladungsgefäßes 2 steigt das Sensorsignal ε aufgrund des vergleichsweise hohen Infrarotanteils des Eigenlichtes an, so daß sich das Sensorsignal wieder zurück in den Hell-Bereich bewegt. Nach Ablauf der Einbrenndauer nimmt der Infrarotanteil des Eigenlichtes ab, so daß das Sensorsignal wieder unterhalb die Einschaltschwelle ε_{E} absinkt und nach vollständigem Einbrennen der Lampe im Wesentlichen nur noch vom Lichteinfall aus der Umgebung bestimmt ist. Während der Einbrennphase gibt sich somit der in Figur 5 dargestellte Kurvenverlauf mit einem nochmaligen Überschwingen in den Hell-Bereich und einem Absinken des Sensorsignals in den Dunkel-Bereich, wobei das Ende der Einbrennphase durch den Übergang in den etwa horizontal verlaufenden Abschnitt des Sensorsignals gekennzeichnet ist.

Durch Auswertung des Gradienten dε/dt läßt sich die Einbrennphase aufgrund der vorbeschriebenen Änderungen des Sensorsignals zuverlässig erfassen, wobei die Steuerung dann auf das Beenden der Einbrennphase reagiert, wenn der Gradient dε/dt einen vorbestimmten Grenzwert E₁ unterschreitet. So lange der Gradient dε/dt größer als dieser Grenzwert E₁ ist, bleibt das Überschwingen des Sensorsignals in den Hell-Bereich unberücksichtigt, so daß vom Mikroprozessor 14 keine Steuersignale zum Ausschalten des Entladungsgefäßes an das Vorschaltgerät 16 abgegeben werden. Der Einfluß des Eigenlichtes wird somit während der Einbrennphase zuverlässig unterbunden.

Nach der Einbrennphase, das heißt nachdem der Gradient dε/dt den Grenzwert E₁ unterschritten hat, wird über die Programmsteuerung eine Ausschaltschwelle ε_{A} festgelegt, die um einen vorbestimmten Wert oberhalb desjenigen Sensorsignales liegt, bei dem die Einbrennphase beendet war. Das heißt, die Ausschaltschwelle ε_{A} wird nach jedem Einschalten des Entladungsgefäßes 2 neu festgelegt, so daß ein Einfluss von Fehlerquellen, wie beispielsweise die Außentemperatur (Veränderung des Infrarotlichtanteils durch Quecksilberdampfdruckschwankungen), Schwankungen des Netzes oder das Alter der Lampe kompensiert werden.

Mit zunehmender Helligkeit steigt das Sensorsignal ε an und erreicht die nach der Einbrennphase festgelegte Ausschaltschwelle ε_{A}, so daß das Entladungsgefäß 2 ausgeschaltet wird. Durch das Ausschalten der Entladungsgefäß 2 entfällt der auch noch nach der Einbrennphase vorhandene vergleichsweise geringe Infrarotlichtanteil des Eigenlichtes, so daß das Sensorsignal nochmals kurz nach unten, in den Dunkelbereich abfällt und dann mit zunehmender Helligkeit in der in Figur 5 dargestellten Weise ansteigt - der Zyklus kann von Neuem beginnen.

Die in Figur 6 dargestellte Steuerung unterscheidet sich von der in Figur 5 dargestellten Steuerung lediglich darin, daß die nach der Einbrennphase ermittelte Ausschaltschwelle ε_{A} nicht wie beim vorbeschriebenen Ausführungsbeispiel konstant gehalten wird, sondern dynamisch in Abhängigkeit vom Verlauf des Sensorsignals im Dunkelbereich verändert wird. Eine derartige dynamische Nachführung der Ausschaltschwelle ε_{A}(t) ermöglicht es, langsame Änderungen des Sensorsignals, beispielsweise verursacht durch Temperaturveränderungen während der Dunkelphase (insbesondere in der Winterzeit) zu kompensieren. Das heißt, bei einem vergleichsweise starken Absinken der Temperatur während der Nacht wird der Infrarotlichtanteil des Eigenlichtes aufgrund des sich verringernden Quecksilberdampfdruckes erhöht, so dass das Sensorsignal im Dunkelbereich leicht ansteigt. Der Gradient dε/dt des Sensorsignals ist jedoch wesentlich geringer als während der Einbrennphase, so daß die Lampensteuerung in ihrem normalen Modus verbleibt und nicht auf das Vorliegen einer Einbrennphase entscheidet. Die Ausschaltschwelle wird dann in Abhängigkeit von diesem geringen Gradienten dε/dt in der in Figur 5 dargestellten Weise verändert, wobei die Ausschaltschwelle ε_{A} stets um einen vorbestimmten Wert oberhalb des jeweiligen Sensorsignals liegt.

Um ein Verändern der Ausschaltschwelle bei zunehmender Helligkeit zu verhindern, kann die dynamische Veränderung der Ausschaltschwelle auf einen vorbestimmten Zeitbereich der in Figur 4 dargestellten Kennlinie beschränkt werden, so daß in den Morgenstunden keine dynamische Nachführung der Ausschaltschwelle erfolgt.

Anhand von Figur 7 wird der Fall behandelt, in dem während der Dunkelphase ein Störlichteinfall, beispielsweise verursacht durch Autoscheinwerfer oder Scheinwerfer eines Nachbarhauses vorliegt. Durch dieses Störlicht wird der Infrarotanteil des von den Sensoren 8, 10 erfaßten Lichtes erhöht, so daß das Sensorsignal schlagartig ansteigt und die in der vorbeschriebenen Weise bestimmte Ausschaltschwelle ε_{A} überschreitet.

Dieses schlagartige Ansteigen des Sensorsignals ε führt zu einem Ansteigen des Gradienten dε/dt im Übergangsbereich. Im Speicher des Mikroprozessors 14 ist ein Störlichtgrenzwert E₂ abgelegt, mit dem der Gradient dε /dt verglichen wird. Wenn dieser Gradient den Störlichtgrenzwert E₂ überschreitet, wird von der Programmsteuerung auf das Vorliegen eines Störlichteinfalls entschieden und während einer bestimmten Totzeit t₀ kein Steuersignal zur Veränderung des Betriebszustandes des Entladungsgefäßes 2 abgegeben. Nach Ablauf der Totzeit t₀ wird der Gradient zwischen dem aktuellen Sensorsignal und dem letzten, im Dunkelbereich gemessenen Sensorsignal gebildet und wiederum mit dem Störlichtgrenzwert E₂ verglichen. Für den Fall, daß dieser Gradient immer noch größer als der Störlichtgrenzwert E₂ ist, wird die Totzeit nochmals um den Wert t₀ verlängert. Dieser Zyklus wird wiederholt, bis der Störlichteinfluss verschwunden ist und das Sensorsignal wieder unter die Ausschaltschwelle ε_{A} abgesunken ist.

Um ein übermäßig langes Brennen des Entladungsgefäßes 2 zu verhindern, kann die Anzahl der Totzeitzyklen begrenzt werden oder aber bei jedem Totzeitzyklus die Ausschaltschwelle erhöht werden, bis sie das Niveau des aus dem Störlicht resultierenden Sensorsignals ε überschreitet. Bei zunehmender Helligkeit steigt dann dieses vom Störlicht überlagerte Sensorsignal weiter an, so daß die erhöhte Ausschaltschwelle überschritten und die Lampe 1 in der vorbeschriebenen Weise ausgeschaltet wird.

Der anhand von Figur 3 beschriebene Selbsttest zur Prüfung der Betriebsbereitschaft der Lampe kann beispielsweise durchgeführt werden, indem die Sensoren 8,10 der Lampe 1 abgedeckt werden.

Dieses Abdecken der Sensoren 8, 10 führt zu einem sprungartigen Absinken des Sensorsignals, so daß aufgrund des resultierenden Gradienten dε /dt bei Unterschreiten eines weiteren Selbsttestgrenzwertes der eingangs beschriebene Selbsttest mit einem Ein- und Ausschalten der Lampe initiiert wird.

Im Speicher des Mikroprozessors 14 kann des weiteren noch ein Not-Aus-Grenzwert abgelegt werden, bei dessen Überschreiten vom Mikroprozessor 14 ein Signal zum Abschalten der Leuchtstofflampe 2 abgegeben wird. Über diesen Not-Aus-Grenzwert ist gewährleistet, daß die Lampe auch bei einem fehlerhaften Programmablauf bei Erreichen eines bestimmten Helligkeitsbereiches abgeschaltet wird.

Die Betriebssicherheit der erfindungsgemäßen Lampe läßt sich weiter verbessern, wenn im Speicher des Mikroprozessors 14 eine Maximallaufzeit abgelegt werden, so dass beispielsweise nach Überschreiten eines Maximalwertes der Einbrenndauer die Ausschaltschwelle in Abhängigkeit vom zuletzt erfaßten Sensorsignals festgelegt wird.

Wie bereits vorstehend angedeutet, kann aus dem Verlauf der Kennlinie gemäß Figur 4 ein Rückschluss auf die Tageszeit gezogen werden, wobei davon ausgegangen werden kann, daß eine Symmetrieachse 18 der Kennlinie gemäß Figur 4 etwa einer Zeit von 0.00 Uhr bis 0.30 Uhr entspricht, so daß auch bei einer Erfassung der Kennlinie über 24 Stunden eine relativ genaue Bestimmung der Uhrzeit möglich ist. In Abhängigkeit von dieser Uhrzeit können dann die vorbeschriebenen Parameter zusätzlich kontrolliert und verändert werden.

Offenbart sind eine sensorgesteuerte Lampe und ein Verfahren zu deren Ansteuerung, bei der die Sensorsignale mittels eines Mikroprozessors ausgewertet und auf der Basis der zeitlichen Änderung der Sensorsignale Betriebsparameter der Lampensteuerung verändert oder aktiviert werden.

### Bezugszeichenliste:

- 1: Leuchtstofflampe
- 2: Entladungsgefäß
- 4: Gehäuse
- 6: Einschraubsockel
- 8: Infrarot-Sensor
- 10: Infrarot-Sensor
- 12: Platine
- 14: Mikroprozessor
- 16: Vorschaltgerät
- 18: Symmetrieachse

## Patentansprüche

1. Verfahren zum Ansteuern einer sensorgesteuerten Lampe (1), bei der das einfallende Licht über einen Lichtsensor (8, 10) erfasst wird und über eine Steuereinheit (16) in Abhängigkeit vom Sensorsignal (ε) ein Leuchtmittel der Lampe (1) angesteuert wird, mit den folgenden Schritten:
- Erfassen einer zeitlichen Änderung des Sensorsignals (dε/dt) und
- Festlegen von Steuerparametern (ε_{E}, ε_{A}, t₀) zur Ansteuerung des Leuchtmittels (2) in Abhängigkeit von der Größe (ε) und der zeitlichen Änderung (dE/dt) des Sensorsignals.
- wobei bei Unter- bzw. Überschreiten eines Grenzwerts (E₁, E₂) der zeitlichen Änderung des Sensorsignals (dε/dt) der dazugehörige Sensorwert (ε) mit einem Schwellwert (ε_{E}, ε_{A}) verglichen wird und bei Unter- bzw. Überschreitung dieses Schwellwerts der Betriebszustand des Leuchtmittels geändert wird und
- wobei bei einer nach der Festlegung des Umschaltwertes auftretenden, einen Störlichtgrenzwert (E₂) überschreitenden zeitlichen Änderung des Sensorsignals (ε) während einer vorbestimmten Totzeit (t₀) kein Steuersignal zur Veränderung des Betriebszustandes des Leuchtmittels abgegeben wird,
**dadurch gekennzeichnet, dass**
die Totzeit (t₀) verlängert wird, solange das Sensorsignal (ε) auf dem vertinderten Niveau bleibt und dabei mit zunehmender Totzeit (t₀) die Umschaltschwelle (ε_{A}) angehoben wird, bis das veränderte Niveau des Sensorsignals (ε) erreicht ist.

2. Verfahren nach Patentanspruch 1, wobei nach Unterschreiten des Grenzwertes (E1) eine Ausschaltschwelle (εA) festgelegt wird, die um einen vorbestimmten Wert oberhalb der Größe des Sensorsignals (ε) bei Unterschreiten des Grenzwertes (E1) liegt.

3. Verfahren nach Anspruch 1, wobei über den Mikroprozessor (14) ein Ausschaltsignal abgegeben wird, wenn das Sensorsignal (ε) einen im Speicher des Mikroprozessors (14) abgelegten Not-Aus-Grenzwert überschreitet.

4. Verfahren nach Anspruch 1, wobei während eines Lichtwechselzyklus, beispielsweise eines Tageszyklus erfasste Sensorsignale (ε) im Speicher des Mikroprozessors (14) abgelegt und daraus eine Kennlinie ermittelt wird, aus der in Abhängigkeit vom erfassten Sensorsignal (ε) ein Rückschluss auf die . Zykluszeit (t) ableitbar ist.

5. Verfahren nach Anspruch 4, wobei Abschalt-. Umschalt- oder Einschaltschwellen in Abhängigkeit von der Zykluszeit verändert oder festgelegt werden.

6. Verfahren nach Anspruch 1, wobei die Lampe (1) Sensoren (8.10) hat und ein Mikroprozessor (14) die Sensorsignale (ε) getrennt voneinander oder beide Sensorsignale gewichtet gemeinsam verarbeitet und Steuersignale an eine Lampensteuerung des Leuchtmittels abgibt.

7. Verfahren nach Anspruch 1, wobei bei Verbindung mit der Stromversorgung oder bei Abdecken der Sensoren (8. 10) ein Testzyklus durchfahren wird, wobei die Lampe (1) nach vorbestimmten Zeitintervallen ein- und ausgeschaltet wird.

8. Verfahren Anspruch 1, wobei ein vorgegebener Einschaltwert (ε_{E}) in Abhängigkeit vom LichteinFall bei Inbetriebnahme der Lampe (1) verändert wird.

9. Sensorgesteuerte Lampe, die nach dem Verfahren nach Anspruch 1 angesteuert wird, mit zumindest einem Sensor (8, 10) zur Erfassung des einfallenden Lichtes und mit einer Steuereinheit zur Ansteuerung der Lampe (1) in Abhängigkeit vom Sensorsignal (ε) und der zeitlichen Änderung des Sensorsignals (dε/dt), **gekennzeichnet durch** einen Mikroprozessor (14) zur Erfassung einer zeitlichen Änderung des Sensorsignals (dε/dt), zum Speichern der Sensorsignale und von Betriebsparametern und Grenzwerten (E1, E2) und zur Abgabe eines Steuersignals zur Veränderung eines Betriebszustandes der Lampe (1), wenn das Sensorsignals (ε) einen der Grenzwerte (ε_{E}, ε_{A}) über- oder unterschreitet.

10. Sensorgesteuerte Lampe nach Anspruch 9, wobei zwei Sensoren (8, 10) vorgesehen sind, deren Signale von der Auswerteeinheit (14) getrennt oder gemeinsam verarbeitbar sind.

11. Sensorgesteuerte Lampe nach Anspruch 9, wobei auf einer gemeinsamen Platine (12) der Mikroprozessor (14) zur Erfassung. Speicherung und Verarbeitung der Sensorsignale (ε), zwei Sensoren (8, 10) und die Lampensteuerung (16) angeordnet sind.

12. Sensorgesteuerte Lampe nach 9, wobei die Lampe eine Leuchtstofflampe (1) ist und der Sensor (8, 10) ein IR-Sensor ist.

## Claims

1. Method for driving a sensor-controlled lamp (1) in which the incident light is detected via a light sensor (8, 10) and a luminous means of the lamp (1) is driven via a control unit (16) as a function of the sensor signal (ε), having the following steps:
- detecting a temporal change in the sensor signal (dε/dt) and
- fixing control parameters (ε_{E}, ε_{A}, t₀) for driving the luminous means (2) as a function of the variable (ε) and the temporal change (dε/dt) in the sensor signal,
- in which, upon undershooting or overshooting of a limiting value (E₁, E₂) of the temporal change in the sensor signal (dε/dt), the associated sensor value (ε) is compared with a threshold value (ε_{E}, ε_{A}), and the operating state of the luminous means is changed in event of undershooting or overshooting of this threshold value, and
- in which, in the event of a temporal change, occurring after the fixing or the changeover value and overshooting a parasitic light limiting value (E₂), in the sensor signal (ε) during a predetermined dead time (to), no control signal is output for varying the operating state of the luminous means,
**characterized in that** the dead time (t₀) is lengthened until the sensor signal (ε) remains at the unchanged level, and in this case the changeover threshold (ε_{A}) is raised with increasing dead time (t₀) until the changed level of the sensor signal (ε) is reached.

2. Method according to Claim 1, in which after undershooting of the threshold value (E₁) a switch-off threshold (ε_{A}) is fixed which is situated at a predetermined value above the magnitude of the sensor signal (ε) in the event of undershooting of the limiting value (E₁).

3. Method according to Claim 1, in which the microprocessor (14) outputs a switch-off signal when the sensor signal (ε) overshoots an emergency switch-off limiting value stored in the memory of the microprocessor (14).

4. Method according to Claim 1, in which sensor signals (ε) detected during a light alternating cycle, for example a daily cycle, are stored in the memory of the microprocessor (14), and a characteristic is determined therefrom from which it is possible to derive a conclusion on the cycle time (t) as a function of the detected sensor signal (ε).

5. Method according to Claim 4, in which switch-off, changeover or switch-on thresholds are varied or determined as a function of the cycle time.

6. Method according to Claim 1, in which the lamp (1) has sensors (8, 10), and a microprocessor (14) processes the sensor signals (ε) separately from one another, or processes both sensor signals jointly in a weighted fashion, and outputs control signals to a lamp controller of the luminous means.

7. Method according to Claim 1, in which a test cycle is run through in the event of connection to the power supply or in the event of covering the sensors (8, 10), the lamp (1) being switched on and off after predetermined time intervals.

8. Method according to Claim 1, in which a prescribed switch-on value (ε_{E}) being varied as a function of the incidence of light when the lamp (1) is started up.

9. Sensor-controlled lamp which, is driven using the method according to Claim 1, having at least one sensor (8, 10) for detecting the incident light, and having a control unit for driving the lamp (1) as a function of the sensor signal (ε) and of the temporal change in the sensor signal (dε/dt), **characterized by** a microprocessor (14) for detecting a temporal change in the sensor signal (dε/dt), for storing the sensor signals and operating parameters and limiting values (E1, E2) and for outputting a control signal for varying an operating state of the lamp (1) when the sensor signal (ε) overshoots or undershoots one of the limiting values (ε_{E}, ε_{A}).

10. Sensor-controlled lamp according to Claim 9, in which two sensors (8, 10) are provided whose signals can be processed separately or jointly by the evaluation unit (14).

11. Sensor-controlled lamp according to Claim 9, in which the microprocessor (14) for detecting, storing and processing the sensor signals (ε), two sensors (8, 10) and the lamp controller (16) are arranged on a common printed circuit board (12).

12. Sensor-controlled lamp according to Claim 9, in which the lamp is a fluorescent lamp (1), and the sensor (8, 10) is an IR sensor.

## Revendications

1. Procédé de commande d'une lampe (1) commandée par capteur, dans lequel on détecte la lumière incidente sur un capteur (8,10) de lumière et on commande un moyen éclairant de la lampe (1) par une unité (16) de commande en fonction du signal (ε) de capteur comprenant les stades suivants :
- on détecte une variation du signal de capteur en fonction du temps (dε/dt), et
- on fixe des paramètres (ε_{E}, ε_{A}, t₀) de commande du moyen (2) éclairant en fonction de la grandeur (ε) et de la variation en fonction du temps du signal de capteur (dε/dt);
- si l'on passe en dessous ou au-dessus d'une valeur (E₁, E₂) limite de la variation en fonction du temps du signal de capteur (dε/dt), on compare la valeur (ε) de capteur associée à une valeur (ε_{E}, ε_{A}) de seuil et, si l'on passe en dessous ou au-dessus de cette valeur de seuil, on modifie l'état de fonctionnement du moyen éclairant ; et
- dans lequel, s'il se produit une variation en fonction du temps du signal (ε) de capteur dépassant une valeur (E₂) limite de lumière parasite et se produisant après la fixation de la valeur de commutation, on n'émet pas, pendant un temps mort (t₀) déterminé à l'avance, de signal de commande pour modifier l'état de fonctionnement de l'agent éclairant ;
**caractérisé en ce que**
on prolonge le temps mort (t₀) tant que le signal (ε) de capteur reste au niveau modifié et on relève ainsi, au fur et à mesure que le temps mort (t₀) augmente, le seuil (ε_{A}) de commutation jusqu'à ce que le niveau modifié du signal (ε) de capteur soit atteint.

2. Procédé suivant la revendication 1, dans lequel, après que l'on est passé en dessous de la valeur (E₁) limite, on fixe un seuil (ε_{A}) de mise hors circuit qui se trouve, d'un montant déterminé à l'avance, au-dessus de la valeur du signal (ε) de capteur lorsque l'on passe en dessous de la valeur (E₁) limite.

3. Procédé suivant la revendication 1, dans lequel on émet par le microprocesseur (14) un signal de mise hors circuit lorsque le signal (ε) de capteur dépasse une valeur limite de mise hors circuit d'urgence mémorisée dans la mémoire du microprocesseur (14).

4. Procédé suivant la revendication 1, dans lequel on mémorise dans la mémoire du microprocesseur (14) des signaux (ε) de capteur détectés pendant un cycle alterné de lumière, par exemple un cycle journalier, et on en détermine une caractéristique à partir de laquelle on peut tirer des conclusions sur le temps (t) du cycle en fonction du signal (ε) de capteur détecté.

5. Procédé suivant la revendication 4, dans lequel on modifie ou l'on fixe des seuils de mise hors circuit, de commutation ou de mise en circuit en fonction du temps de cycle.

6. Procédé suivant la revendication 1, dans lequel la lampe (1) a des capteurs (8, 10) et un microprocesseur traite les signaux (ε) de capteur séparément l'un de l'autre ou les deux signaux de capteur conjointement de manière pondérée et émet des signaux de commande sur une commande de lampe du moyen éclairant.

7. Procédé suivant la revendication 1, dans lequel, lors de la liaison avec l'alimentation en courant ou lors du recouvrement des capteurs (8, 10), on parcourt un cycle de test, la lampe (1) étant mise en circuit et hors circuit après des intervalles de temps déterminés à l'avance.

8. Procédé suivant la revendication 1, dans lequel on modifie une valeur (ε_{E}) prescrite de mise en circuit en fonction de la lumière incidente lors de la mise en fonctionnement de la lampe (1).

9. Lampe commandée par capteur qui est commandée par le procédé suivant la revendication 1 et qui comprend au moins un capteur (8, 10) de détection de la lumière incidente et une unité de commande de la lampe (1) en fonction du signal (ε) de capteur et de la variation en fonction du temps du signal de capteur (dε/dt), **caractérisée par** un microprocesseur (14) de détection de la variation en fonction du temps du signal de capteur (dε/dt) pour mémoriser les signaux de capteur et des paramètres de fonctionnement et des valeurs (E₁, E₂) limites pour émettre un signal de commande pour modifier un état de fonctionnement de la lampe (1) lorsque le signal (ε) de capteur passe au-dessus ou en dessous de l'une des valeurs (ε_{E}, ε_{A}) limites.

10. Lampe commandée par capteur suivant la revendication 9, dans laquelle il est prévu deux capteurs (8, 10) dont les signaux peuvent être traités séparément ou conjointement par l'unité (14) d'exploitation.

11. Lampe commandée par capteur suivant la revendication 9, dans laquelle sont montés sur une platine (12) commune le microprocesseur (14) de détection, de mémorisation et de traitement des signaux (ε) de capteur, deux capteurs (8, 10) et la commande (16) de lampe.

12. Lampe commandée par capteur suivant la revendication 9, dans laquelle la lampe est une lampe (1) fluorescente et le capteur (8, 10) est un capteur IR.
